## Europäisches Patentamt
## European Patent Office
## Office européen des brevets

(19)

(11) Publication number: **0 027 826**
**B1**

(12)

# EUROPEAN PATENT SPECIFICATION

(45) Date of publication of patent specification: **28.09.83**

(21) Application number: **80900787.5**

(22) Date of filing: **24.04.80**

(86) International application number:
**PCT/JP80/00086**

(87) International publication number:
**WO 80/02480 13.11.80 Gazette 80/26**

(51) Int. Cl.³: **H 02 K 13/04,**
**H 01 R 43/00, B 23 K 20/10**

(54) **METHOD OF CONNECTING THE LEADS OF AN ARMATURE COIL TO A COMMUTATOR.**

(30) Priority: **27.04.79 JP 53921/79**

(43) Date of publication of application:
**06.05.81 Bulletin 81/18**

(45) Publication of the grant of the patent:
**28.09.83 Bulletin 83/39**

(84) Designated Contracting States:
**DE FR GB**

(56) References cited:
**EP - A - 0 007 558**
**FR - A - 2 363 927**
**JP - A - 50 127 103**
**JP - A - 50 134 763**
**JP - A - 51 002 905**
**JP - B - 43 025 377**
**JP - Y - 41 008 110**
**US - A - 2 985 954**
**US - A - 3 101 404**
**US - A - 3 128 649**
**US - A - 3 505 726**
**US - A - 3 791 569**

(73) Proprietor: **MITSUBISHI DENKI KABUSHIKI KAISHA**
**2-3, Marunouchi 2-chome Chiyoda-ku**
**Tokyo 100 (JP)**

(72) Inventor: **HAMANO, Isao Mitsubishi Denki Kabushiki Kaisha**
**Himeji Seisakusho**
**840, Chiyoda-cho Himeji-shi Hyogo 670 (JP)**
Inventor: **YABUNAKA, Kiyoshi Mitsubishi Denki K.K.**
**Himeji Seisakusho**
**840, Chiyoda-cho Himeji-shi Hyogo 670 (JP)**

(74) Representative: **Beresford, Keith Denis Lewis et al,**
**R.G.C. Jenkins & Co. 12-15, Fetter Lane**
**London EC4A 1PL (GB)**

Courier Press, Leamington Spa, England

Methods of connecting the leads of an armature coil to a commutator

The present invention relates to a method of connecting the leads of an armature coil, for a starter motor for example, to a commutator by ultrasonic welding.

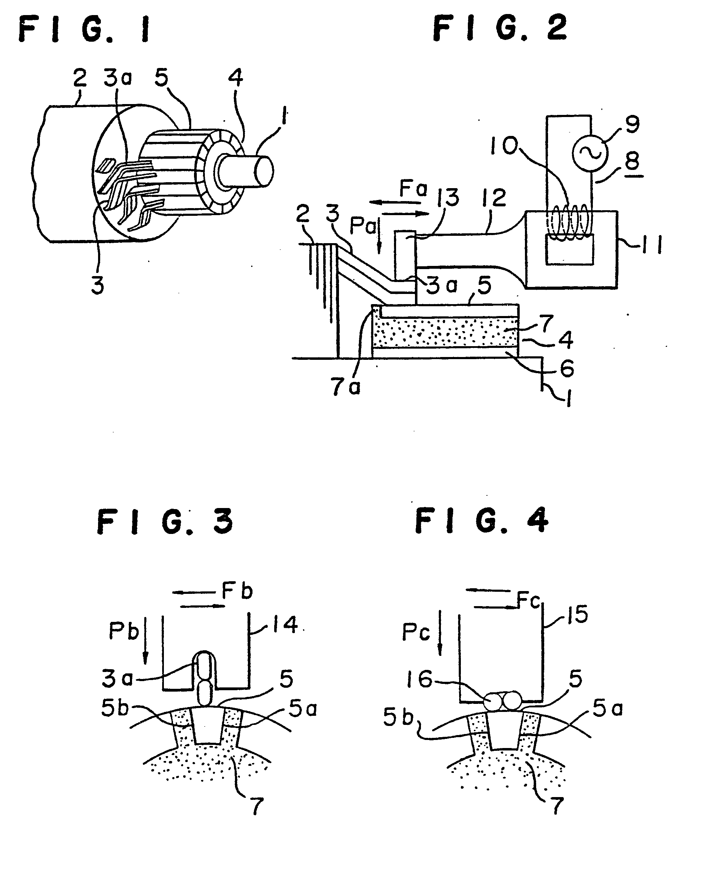

A known method for connecting the leads of an armature coil to a commutator will be described with reference to Figures 1 and 2.

Figure 1 is a schematic view of a portion of a starter motor constructed by the conventional method, and Figure 2 is a sectional view of apparatus employed in this conventional method.

In Figures 1 and 2, (1) designates the shaft of a starter motor; (2) designates an armature core fixed to the shaft; (3) designates the leads of an armature coil held in a wound form in slots (not shown) provided in the armature core; (3a) designates the ends of the armature coil leads; (4) designates a commutator to which the lead ends (3a) of the armature coil are connected and which comprises a plurality of segments (5) positioned to extend parallel to the axis of the shaft (1) and a moulded substrate (7) moulded in one piece with a bushing (6) fitted on the shaft (1). The segments are adhered along their axial sides to the substrate (7) and end portions of the segments (5) are bonded to end portions (7a) of the moulded substrate (7). The reference numeral (8) designates an ultrasonic welding apparatus for welding the lead ends (3a); the segments (5) by subjecting the lead ends to ultrasonic vibrations; (9) designates a power source for generating an ultrasonic waveform; (10) designates a coil; (11) designates a magneto-striction transducing element; (12) designates a welding horn; and (13) designates a welding tip.

The method of welding the lead ends (3a) of the armature coil leads (3) to the segments (5) in the production of the structure mentioned above will now be described. Two coil lead ends (3a) are superposed on each other in parallel and are laid on a respective segment (5). The lead ends (3a) are pressed downwardly against the segment (5) by the tip (13) and are subjected to a vertical compressive force (Pa). At the same time, ultrasonic vibrations are applied to the lead ends (3a) in the directions of the arrows (Fa), i.e. parallel to the axis of the commutator and the shaft 1, as shown in Figure 2. Frictional heat is generated in the coil lead ends (3a) and the segment (5) by the applied ultrasonic vibrations, which results in the welding together of these members and thus in the armature coil leads being connected to the segment.

In the conventional ultrasonic welding method described above, steps are generally taken to prevent "peeling" of the segments (5) from the moulded substrate (7), and also to prevent cracking of the moulded substrate ends (7a), which cause overspeed strength failure of the commutator and both of which tend to occur because the ultrasonic vibration of the coil lead ends (3a) excites the segment (5) through friction. For example, the bonded area between each segment and the moulded substrate may be increased, or the shape of each segment (5) may be appropriately adapted, or the thickness of each end portion (7a) of the moulded substrate may be increased in order to enhance the strength of the bond between the moulded substrate (7) and each segment (5). However, these measures result in an increase in production cost and lower productivity.

The present invention provides a method of connecting the leads of an armature coil to a commutator having a plurality of segments which extend parallel to the axis of the commutator and are bonded to a moulded support comprising pressing the leads against the segments and subjecting the leads to ultrasonic vibrations for welding them to the segments, characterised in that the direction of the vibrations applied to the leads is generally transverse to the commutator axis.

This method enables the disadvantages of the conventional ultrasonic welding method, namely a decrease in the strength of the bond between the moulded substrate and the segment, and cracking of the moulded substrate, to be overcome. Further a reduction in working cost and an improvement in strength for the commutator can be attained, since it is unnecessary to conduct a special moulding operation or to form the segments and the moulded substrate in special shapes to assure the required bonding strength.

The invention is described further, by way of example, with reference to the accompanying Figures 3 and 4.

Figure 3 is a sectional view illustrating a first embodiment of the method of the present invention; and Figure 4 is a sectional view illustrating another embodiment of the present invention.

In Figure 3, parts described above in relation to the prior art are given the same reference numerals.

In this instance, the ultrasonic vibrating apparatus (8) has a welding tip (14) arranged to apply to the coil lead ends (3a) of the armature coil forces comprising a compressive force (Pb) and a vibratory force (Fb) as illustrated in Figure 3.

More particularly, in the method of the invention, the coil lead ends (3a) are subjected to ultrasonic vibrations applied by the tip in a direction perpendicular to the axis of the commutator and shaft, i.e. in a direction perpendicular to the longitudinal direction of the respective segment (5), as shown by the arrow (Fb) in Figure 3, for welding of the coil lead ends (3a) of the armature coil to the segment (5).

In this embodiment, since the ultrasonic vibrations are applied to each segment (5) in a transverse direction, the pressure generated by the vibrations is transmitted by side surface portions (5a), (5b) of the segment (5), which extend parallel to the axis of the shaft and are circumferentially spaced, to the moulded substrate (7). The moulded substrate is thereby compressed. Preferably it is formed from phenol rein and inorganic filler etc. so that it has a high compressive strength. Accordingly, the moulded substrate can withstand a stress significantly higher than can the conventional structure wherein the excitations caused by the vibrations create stress both in the adhesive joins between the moulded substrate (7) and the respective segment and in the end portion (7a) of the moulded substrate (7). Thus, the disadvantages of the conventional method may be overcome.

Figure 4 shows another embodiment of the ultrasonic welding method of the invention, wherein coil lead ends (16) of circular cross section are positioned side by side in parallel on the periphery of the respective segment (5). In this embodiment, the coil lead ends (16) are connected to the segment (5) by welding them thereto through the application of a compressive force (Pc) and a vibratory force (Fc) using a welding tip (15) in which ultrasonic vibrations are generated. In this case, each coil lead end (16) of the armature coil is directly welded to the segment (5) since the vibrating force (Fc) is applied directly by the tip (15) to each coil lead end (16). An improved weld may be obtained in this manner.

In the embodiments described above, the ultrasonic vibrations are applied in a direction perpendicular to axis of the commutator and of the shaft (1). A similar effect can be expected even if the vibrations are applied in an oblique direction relative to the axis, so long as the ultrasonic welding of the coil lead ends (3a) of the armature coil (3) to the segments (5) is performed by vibrations directed so that the component of vibrating force in the axial direction of the shaft does not exceed the combined strength of the adhesive connection between the moulded substrate and each segment (5) and the support provided by the end portions (7a).

## Claims

1. A method of connecting the leads (3, 16) of an armature coil to a commutator having a plurality of segments (5) which extend parallel to the axis of the commutator and are bonded to a moulded support (7) comprising pressing the leads (3, 16) against the segments (5) and subjecting the leads (3, 16) to ultrasonic vibrations for welding them to the segments (5), characterised in that the direction of the vibrations applied to the leads (3, 16) is generally transverse to the commutator axis.

2. A method of connecting the leads (3, 16) of an armature coil to a commutator, according to Claim 1 characterised in that the direction of the vibrations applied to the leads (3, 16) for welding them to the segments (5) is substantially perpendicular to the commutator axis.

3. A method of connecting the leads (3, 16) of an armature coil to a commutator, according to Claim 1 characterised in that the direction of the vibrations applied to the leads (3, 16) for welding them to the segments (5) is oblique to the commutator axis.

## Revendications

1. Procédéde connexion des conducteurs (3, 16) d'un enroulement d'induit à un collecteur comportant une série de segments (5) qui s'étendent parallèlement à l'axe du collecteur et son liés à un support moulé (7), consistant à presser les conducteurs (3, 16) contre les segments (5) et à soumettre les conducteurs (3, 16) à des vibrations ultra-sonores pour les souder aux segments (5), caractérisé en ce que la direction des vibrations appliquées aux conducteurs (3, 16) est sensiblement transversale à l'axe du collecteur.

2. Procédé de connexion des conducteurs (3, 16) d'un enroulement d'induit à un collecteur, selon la revendication 1, caractérisé en ce que la direction des vibrations appliquées aux conducteurs (3, 16) pour les souder aux segments (5) est sensiblement perpendiculaire à l'axe du collecteur.

3. Procédé de connexion des conducteurs (3, 16) d'un enroulement d'induit à un collecteur, selon la revendication 1, caractérisé en ce que la direction des vibrations appliquées aux conducteurs (3, 16) pour les souder aux segments (5) est oblique par rapport à l'axe du collecteur.

## Patentansprüche

1. Verfahren zur Verbindung des Zuleitungen (3, 16) einer Ankerwicklung mit einem Kommutator mit einer Vielzahl von Segmenten (5), welche sich parallel zur Achse des Kommutators erstrecken und mit einer geformten Halterung (7) verbunden sind, wobei die Zuleitungen (3, 16) gegen die Segmente (5) gepreßt werden und zum Verschweißen derselben mit den Segmenten (5) einer Ultraschallschwingungsbehandlung unterworfen werden, dadurch gekennzeichnet, daß die Richtung der die Zuleitungen (3, 16) beaufschlagenden Schwingungen im wesentlichen quer zur Kommutatorachse verläuft.

2. Verfahren zur Verbindung der Zuleitungen (3, 16) einer Ankerwicklung mit einem Kommutator nach Anspruch 1, dadurch gekennzeichnet, daß die Richtung der die Zuleitungen (3, 16) beaufschlagenden Schwingungen zur Verschweißung derselben mit den Segmenten (5) in wesentlichen senkrecht zur Kommutatorachse verläuft.

3. Verfahren zur Verbindung der Zuleitungen (3, 16) einer Ankerwicklung mit einem Kommutator, nach Anspruch 1, dadurch gekennzeichnet, daß die Richtung der die Zuleitungen (3, 16) beaufschlagenden Schwingungen zur Verschweißung derselben mit den Segmenten (5) schräg zur Kommutatorachse verläuft.

# F I G. 1

# F I G. 2

# F I G. 3

# F I G. 4